# EUROPEAN PATENT SPECIFICATION

(11) **EP 2 469 201 B1**
(45) Date of publication and mention of the grant of the patent: **03.04.2019**
(21) Application number: 11007843.3
(22) Date of filing: 27.09.2011
(51) Int. Cl.: F25B 27/00, F25B 49/02, F25B 13/00

(54) **Heat pump apparatus and control method thereof**
Wärmepumpenvorrichtung und Steuerungsverfahren dafür
Appareil de pompe à chaleur et son procédé de contrôle

(30) Priority: 27.12.2010 JP 2010289978
(43) Date of publication of application: 27.06.2012
(73) Proprietor: Mitsubishi Electric Corporation, Tokyo 100-8310 (JP)
(72) Inventor: Amano, Katsuyuki, Tokyo 100-8310 (JP)
(74) Representative: Pfenning, Meinig & Partner mbB

(56) References cited:
- EP-A1- 2 196 749
- WO-A1-2004/097308
- GB-A- 976 120
- JP-A- 2007 094 652

## Description

### BACKGROUND OF THE INVENTION

### 1. Field of the Invention

The present invention relates to a heat pump apparatus that has a water-refrigerant heat exchanger in which water is subjected to heat exchange with a refrigerant and can make use of heat generated by an inverter and to a control method of such an apparatus.

### 2. Description of the Related Art

A conventional heat pump water heater rotationally drives a compressor motor to compress a refrigerant using an AC current converted by an inverter from a DC current. When compressed, the refrigerant becomes high in temperature and pressure and flows from the compressor into a water-refrigerant heat exchanger, where water is subjected to heat exchange with the high-temperature, high-pressure refrigerant to produce hot water.

During compressor operation, switching elements and diodes contained in the inverter generate heat. In order to prevent such switching elements and diodes from failing due to self-heating, a heat dissipating member such as a heat sink is mounted on an inverter module containing the switching elements and diodes for the inverter, thereby releasing the heat generated by the inverter into the air (for example, see Japanese Unexamined Patent Application Publication No. 2007-271212 (see Fig. 3 in paragraph No. 0036)).

Alternatively, for the purpose of cooling the inverter module, a waste heat recovery heat exchanger may be provided on piping through which water flows before entering the water-refrigerant heat exchanger, and the heat exchanger is mounted on such a waste heat recovery heat exchanger to dissipate its heat (for example, see Japanese Unexamined Patent Application Publication No. 2010-144948 (see Fig. 4 in paragraph No. 0016)).

However, the heat pump water heater disclosed in Japanese Unexamined Patent Application Publication No. 2007-271212 has a disadvantage of energy loss resulting from heat energy released into the air since a heat sink is provided on the inverter module for releasing heat into the air.

Also, the heat pump water heater disclosed in Japanese Unexamined Patent Application Publication No. 2010-144948 has a disadvantage in that a waste heat recovery heat exchanger must be separately provided on which the inverter module is mounted so as to be cooled.
EP 2 196 749 A1 describes a stand alone refrigeration machine with an inverter driven variable speed compressor and a liquid cooled condenser, wherein the inverter is cooled by a cold element of the condenser with which it is in intimate contact.

### SUMMARY OF THE INVENTION

The present invention has been achieved in light of the foregoing and an object thereof is to provide a highly energy-efficient, low-cost heat pump apparatus that allows an inverter module to be mounted on a water-refrigerant heat exchanger and can make use of heat generated by switching elements and the like of the inverter for heating water.

A heat pump apparatus according to the present invention includes a compressor for compressing a low-temperature refrigerant and discharging a high-temperature refrigerant, a heat exchanger through which water to be subjected to heat exchange with the high-temperature refrigerant flows, and an inverter module that is mounted in the heat exchanger and has a wide-bandgap semiconductor device in an inverter for converting a DC current to an AC current and supplies the AC current to the compressor.

A control method for the heat pump apparatus according to the present invention includes the step of comparing the temperature of a refrigerant discharged from the heat exchanger to a predetermined maximum allowable temperature for the refrigerant, the heat exchanger having an inverter module for supplying AC electric power to a compressor and exchanging heat between water and the high-temperature refrigerant discharged from the compressor, and the step of reducing the rotation speed of the compressor if the temperature of the refrigerant is higher than the maximum allowable temperature.

The heat pump apparatus according to the present invention includes an inverter module having a wide bandgap semiconductor mounted in a water-refrigerant heat exchanger and thereby increase a temperature difference between the inverter module and water flowing in the water-refrigerant heat exchanger, which allows heat generated by the inverter module to be effectively transmitted to the water, thereby providing an advantageous effect of improving energy saving performance.

A control method for the heat pump apparatus according to the present invention provides an advantageous effect of preventing the heat pump apparatus from failing when the temperature of the inverter module mounted in the heat exchanger that exchanges heat between water and the refrigerant rises to an excessively high level.

### BRIEF DESCRIPTION OF THE DRAWINGS

Fig. 1 is a refrigerant circuit diagram of a heat pump apparatus according to Embodiment 1.
Fig. 2 is a perspective view of a water-refrigerant heat exchanger and an inverter module according to Embodiment 1.
Fig. 3 is a perspective view of a water-refrigerant heat exchanger and an inverter module according to Embodiment 1.
Fig. 4 is a cross-sectional view of a case that contains a water-refrigerant heat exchanger according to Embodiment 1.
Fig. 5 is a cross-sectional view of a case that contains another water-refrigerant heat exchanger according to Embodiment 1.
Fig. 6 is an electronic circuit diagram of a heat pump apparatus according to Embodiment 1.
Fig. 7 is a control flow chart of a heat pump apparatus according to Embodiment 1.
Fig. 8 is a cross-sectional view of a case that contains a water-refrigerant heat exchanger according to a non-claimed heat pump apparatus.

### DESCRIPTION OF THE PREFERRED EMBODIMENTS

### Embodiment 1

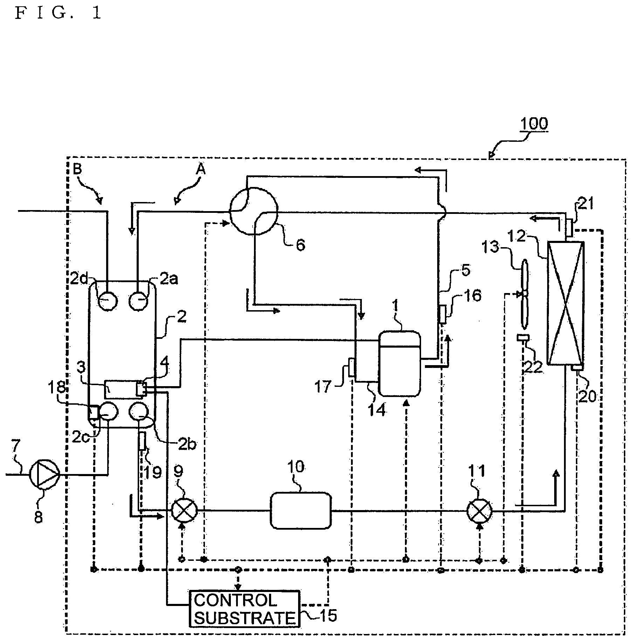

Fig. 1 shows a refrigerant circuit diagram of a heat pump apparatus according to Embodiment 1. A refrigerant flow in a heat pump apparatus according to Embodiment 1 will now be described with reference to Fig. 1. A heat pump water heater which is one type of heat pump apparatus that utilizes a heat pump cycle in which a refrigerant is circulated, is described in terms of refrigerant circuit configuration and operation. An arrow in the figure shows a direction in which a refrigerant flows in a water heating mode or a normal operation mode.

As shown in Fig. 1, a heat pump apparatus 100 has a refrigerant circuit A and a water circuit B. The refrigerant circuit A is a circuit in which a refrigerant discharged from a compressor 1 is circulated, while the water circuit B is a circuit through which water flows. A water-refrigerant heat exchanger 2 exchanges heat between a refrigerant flowing in the refrigerant circuit A and water flowing in the water circuit B. In the heat pump apparatus 100 according to the present invention, an inverter module 3 that supplies AC power for driving the compressor 1 is mounted in the water-refrigerant heat exchanger 2. Electric power, converted to AC power through the inverter module 3, is supplied to the compressor 1 via the wiring connected to a resin connector 4 provided on the inverter module 3. A detailed arrangement of the water-refrigerant heat exchanger 2 and the inverter module 3 will be described later.

A refrigerant flow associated with normal operation of the heat pump apparatus 100 is described with reference to Fig. 1. The term "normal operation" refers to operation associated with water heating operation performed by the water-refrigerant heat exchanger 2.

When compressed in the compressor 1, a refrigerant becomes a high-temperature, high-pressure gas refrigerant, which is discharged to a discharge pipe 5. After flowing through a four-way valve 6 in the discharge pipe 5, the gas refrigerant flows into the water-refrigerant heat exchanger 2 through a refrigerant inlet 2a provided at the upper part of the water-refrigerant heat exchanger 2. The water-refrigerant heat exchanger 2 has a multilayer structure in which a refrigerant and water flow alternately. When the high-temperature refrigerant is subjected to heat exchange with water in the water-refrigerant heat exchanger 2, it becomes a liquid refrigerant, which is discharged through a refrigerant outlet 2b provided at the lower part of the water-refrigerant heat exchanger 2.

A water flow into the water-refrigerant heat exchanger 2 is described below. The water circuit B has a water pipe 7 and a pump 8 provided in the water pipe 7. The pump 8 functioning as a water drive device sucks water in the water pipe 7, pressurizes and discharges it into the water pipe 7, thereby circulating water in the water circuit B. The inverter controls the rotation speed of the pump 8 to control the flow rate of water. Water discharged from the pump 8 enters the water-refrigerant heat exchanger 2 through a water inlet 2c provided at the lower part of the water-refrigerant heat exchanger 2. When the water is subjected to heat exchange with the refrigerant in the water-refrigerant heat exchanger 2, it becomes high in temperature and is discharged through a water outlet 2d provided in the upper part of the water-refrigerant heat exchanger 2. Thus heated water discharged through the water outlet 2d is stored in a hot-water tank (not illustrated) or is used for indoor heating. The pump 8 is driven and controlled by a control device and a drive device separately provided on the outside of the heat pump apparatus 100.

The liquid refrigerant discharged from the water-refrigerant heat exchanger 2 is depressurized and supercooled through a first expansion valve 9 before flowing into an accumulator 10. The liquid refrigerant flowing out of the accumulator 10 is depressurized through a second expansion valve 11 to turn into a gas-liquid two-phase refrigerant which enters an air-cooled heat exchanger 12. The air-cooled heat exchanger 12 is a heat exchanger on the heat source side and functions as an evaporator. The air-cooled heat exchanger 12 exchanges heat between the low-temperature refrigerant and outside air, causing the thus heated refrigerant to become an evaporated gas and form a low-pressure gas refrigerant. A blower fan 13 is provided in the vicinity of the air-cooled heat exchanger 12 and feeds the air-cooled heat exchanger 12 with outside air for heat-exchange with the refrigerant. The gas refrigerant from the air-cooled heat exchanger 12 extends through the four-way valve 6 and a suction pipe 14 into the compressor 1.

During a defrost operation for removing the frost formed on the air-cooled heat exchanger 12 associated with normal operation, the high-temperature, high-pressure refrigerant discharged from the compressor 1 flows into the air-cooled heat exchanger 12, thereby melting away the frost attached to the air-cooled heat exchanger 12 associated with normal operation.

A temperature detection device and a control substrate 15 for controlling actuators, such as the compressor 1, four-way valve 6, the first expansion valve 9, the second expansion valve 11, and the blower fan 13, all of which are provided in the heat pump apparatus 100, are described below. In the heat pump apparatus 100, a discharge refrigerant temperature detection device 16 for detecting the temperature of a refrigerant discharged from the compressor 1 is provided in the discharge pipe 5, while a suction refrigerant temperature detection device 17 for detecting the temperature of a refrigerant sucked in by the compressor 1 is provided in the suction pipe 14. A water temperature detection device 18 for detecting the temperature of water flowing through the water pipe 7 is provided in the water inlet 2c of the water-refrigerant heat exchanger 2, while an outflow refrigerant temperature detection device 19 for detecting the temperature of a refrigerant discharged from the water-refrigerant heat exchanger 2 is provided in the refrigerant outlet 2b. In the air-cooled heat exchanger 12, a liquid refrigerant temperature detection device 20 for detecting the temperature of a liquid refrigerant flowing into the air-cooled heat exchanger 12 through the second expansion valve 11 and a gas refrigerant temperature detection device 21 for detecting the temperature of a gas refrigerant flowing from the air-cooled heat exchanger 12 into the four-way valve 6 are provided. Also, an outside air temperature detection device 22 for detecting an outside air temperature is provided in the vicinity of the air-cooled heat exchanger 12.

The detected values from the discharge refrigerant temperature detection device 16, the suction refrigerant temperature detection device 17, the water temperature detection device 18, the outflow refrigerant temperature detection device 19, the liquid refrigerant temperature detection device 20, the gas refrigerant temperature detection device 21, and the outside air temperature detection device 22 and the motor RPM data of the motor from the compressor 1 are output to the control substrate 15. Also, a remote controller is provided inside a room, through which a user sets operating information such as a supply water temperature, an amount of hot water, and a bath time. Thus set operating information is output by the remote controller to the control substrate 15. On the basis of the detected values from the various detection devices and the operating information from the remote controller, the control substrate 15 sends an actuator control signal to each actuator for controlling the rotation speed of the compressor 1 and the blower fan 13 and the an opening degree of the first expansion valve 9 and the second expansion valve 11.

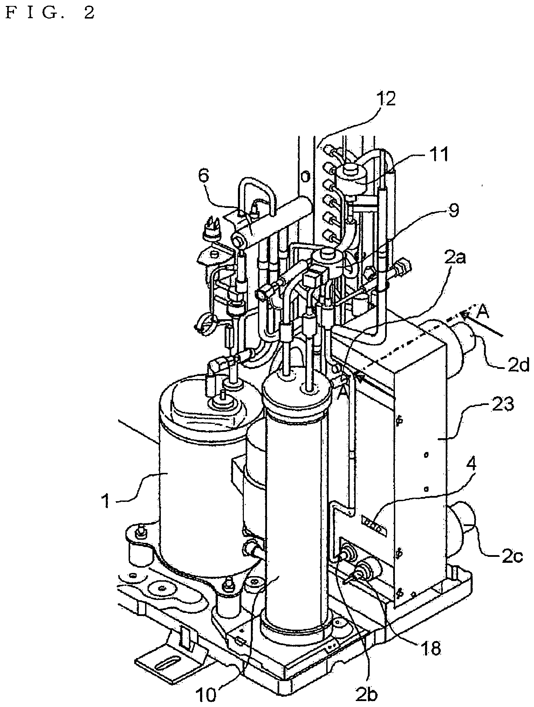

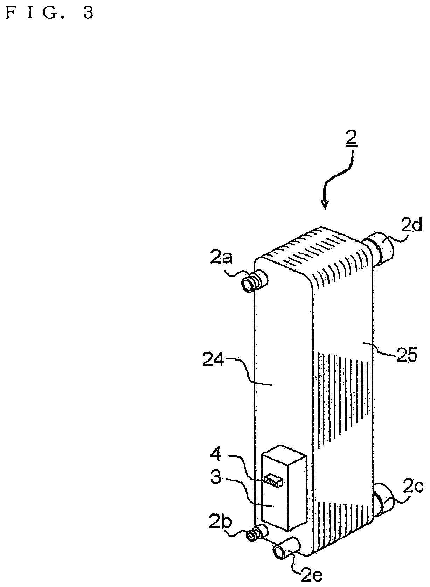

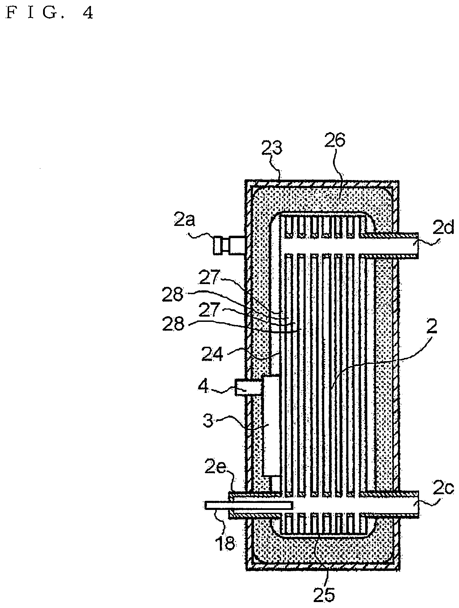

A refrigerant flow in the heat pump apparatus 100 according to the present invention is described above, and its structure is described below. Fig. 2 is a perspective view of a heat pump apparatus 100 according to Embodiment 1. Fig. 3 is a perspective view of a water-refrigerant heat exchanger 2 and an inverter module 3. Fig. 4 is a cross-sectional view taken along line A-A of Fig. 2 or a cross-sectional view of a case 23.

As shown in Fig. 2, the water-refrigerant heat exchanger 2 of the heat pump apparatus 100 is housed in the case 23 that is a substantial right-angled parallelepiped. A connector 4 of the inverter module 3 is exposed from the case 23. The control substrate 15 and the inverter module 3 can be electrically connected to each other by inserting a plug connected with the control substrate 15 into the connector 4. Likewise, the compressor 1 and the inverter module 3 can be electrically connected to each other by inserting a plug connected to the compressor 1 into the connector 4. Thus, the use of the connector 4 exposed from the case 23 allows the inverter module 3 to be easily connected to the control substrate 15 and the compressor 1.

Fig. 3 is a perspective view of the water-refrigerant heat exchanger 2 and the inverter module 3, both of which are provided within the case 23. Fig. 4 is a cross-sectional view taken along line A-A of Fig. 2. The configuration of the water-refrigerant heat exchanger 2 and the inverter module 3 is described below with reference to Figs. 3 and 4.

The inverter module 3 is mounted using an adhesive or a fixture such as a screw in such a manner that its heat radiating surface is closely adhered to a surface 24 of the substantially parallelepiped-shaped water-refrigerant heat exchanger 2. The term "heat radiating surface of the inverter module 3" refers to a surface that is most heated by heat generated inside the inverter module 3 or a surface that is face-to-face with the heat generating elements, such as switching elements, disposed in the inverter module 3. In Embodiment 1, the term "heat generating surface" refers to a surface that faces a surface on which the connector 4 is provided.

The refrigerant inlet 2a and the water outlet 2d are provided in the upper part of the water-refrigerant heat exchanger 2, while the refrigerant outlet 2b and the water inlet 2c are provided in the lower part of the water-refrigerant heat exchanger 2. In addition, a pipe that forms the water inlet 2c penetrates the water-refrigerant heat exchanger 2 so as to project from the opposite surface. Such a projection provides a temperature detection device insertion opening 2e into which the water temperature detection device 18 is inserted. In Embodiment 1, the refrigerant inlet 2a and the refrigerant outlet 2b are provided in the surface 24, while the water inlet 2c and the water outlet 2d are provided in the surface opposite the surface 24. The water temperature detection device 18 is a thermistor, which is inserted into the inside of the water-refrigerant heat exchanger 2 through the temperature detection device insertion opening 2e. The temperature detection device insertion opening 2e, when it has the water temperature detection device 18 inserted thereinto, is sealed so as to be kept water-tight.

The inverter module 3 is mounted on the lower part of the water-refrigerant heat exchanger 2 so as to be located closer to the water inlet 2c than to the water outlet 2d in the lengthwise direction of the water-refrigerant heat exchanger 2.

As described above, locating the inverter module 3 closer to the water inlet 2c than to the water outlet 2d allows the heat energy generated by the inverter module 3 to be effectively transmitted to low-temperature water before the water is subjected to heat exchange with a high-temperature refrigerant.

As shown in Fig. 4, the water-refrigerant heat exchanger 2 includes a number of metallic plates stacked in layers. A water layer 27 through which water flows and a refrigerant layer 28 through which a refrigerant flows are arranged alternately. Heat is exchanged between the plurality of water layers 27 and refrigerant layers 28. In other words, water flowing into the water-refrigerant heat exchanger 2 through the water inlet 2c splits into many channels, goes up through the plurality of water layers 27, and flows out through the water outlet 2d, while the refrigerant flowing in through the refrigerant inlet 2a splits into many channels, goes down through the plurality of refrigerant layers 28, and flows out through the refrigerant outlet 2b.

The ends of the plurality of metallic plates are arranged in layers on a horizontal circumferential surface 25 of the water-refrigerant heat exchanger 2, which makes the circumferential surface 25 finely irregular. For this reason, mounting the inverter module 3 on that surface results in a reduced contact area between the water-refrigerant heat exchanger 2 and the inverter module 3. Accordingly, the heat pump apparatus 100 according to Embodiment 1 has the inverter module 3 mounted on a surface 24 perpendicular to the circumferential surface 25, thereby increasing the contact area.

The water temperature detection device 18, namely, the thermistor is inserted into the water inlet 2c from the opposite side of the water inlet 2c and detects the temperature of water flowing through the water inlet 2c. Since the inverter module 3 is located in the vicinity of the water inlet 2c, heat generated by the inverter module 3 is transmitted to water in the water inlet 2c, thereby heating the water.

The case 23 includes a heat insulating material 26. The water-refrigerant heat exchanger 2 and the inverter module 3 are covered with the heat insulating material 26. However, the refrigerant inlet 2a, the refrigerant outlet 2b, the water inlet 2c, the water outlet 2d, the temperature detection device insertion opening 2e, and the connector 4 are provided so as to project from the heat insulating material 26 and the case 23.

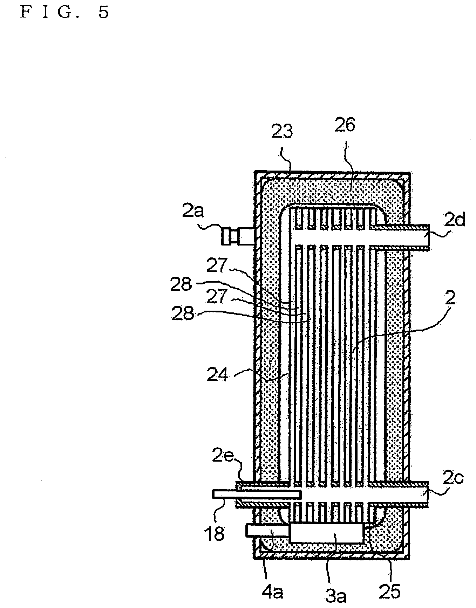

Fig. 5 is a cross-sectional view of another case 23 according to Embodiment 1. Although Fig. 4 shows that the inverter module 3 is mounted on the surface 24 of the water-refrigerant heat exchanger 2, Fig. 5 shows the inverter module 3 mounted on the circumferential surface 25 of the water-refrigerant heat exchanger 2. The pipe that forms the water inlet 2c is perpendicular to the surface 24 and the circumferential surface 25 is provided in parallel on the water-refrigerant heat exchanger 2. As shown in Fig. 5, mounting the inverter module 3a on the circumferential surface 25 allows the heat radiating surface of the inverter module 3a to be parallel with the pipe that forms the water inlet 2c, thereby effectively heating the water flowing in through the water inlet 2c.

As described above, the heat pump apparatus 100 according to Embodiment 1 has the inverter module 3 mounted in the water-refrigerant heat exchanger 2 in which low-temperature water flows and is heated by a high-temperature refrigerant, thereby allowing the heat generated by the inverter module 3 associated with the operation of the compressor 1 to be transmitted to the low-temperature water for heating.

Also, locating the inverter module 3 closer to the water inlet 2c than to the water outlet 2d allows the low-temperature water to be heated by the heat generated by the inverter module 3.

Furthermore, the heat insulating material 26 is provided inside the case 23 so as to cover the water-refrigerant heat exchanger 2 and the inverter module 3, thereby allowing the heat generated by the inverter module 3 to be effectively transmitted to the water-refrigerant heat exchanger 2 without dissipation of the heat to the outside.

In addition, the connector 4 is provided so as to project from the heat insulating material 26, thereby preventing the resin constituting the connector 4 from being deformed.

Embodiment 1 is described by way of an example of a refrigerant circuit. The present invention places no limitation on the configuration of the refrigerant circuit itself as long as mounting the inverter module 3 to the water-refrigerant heat exchanger 2 transmits the heat generated by the inverter module 3 to water.

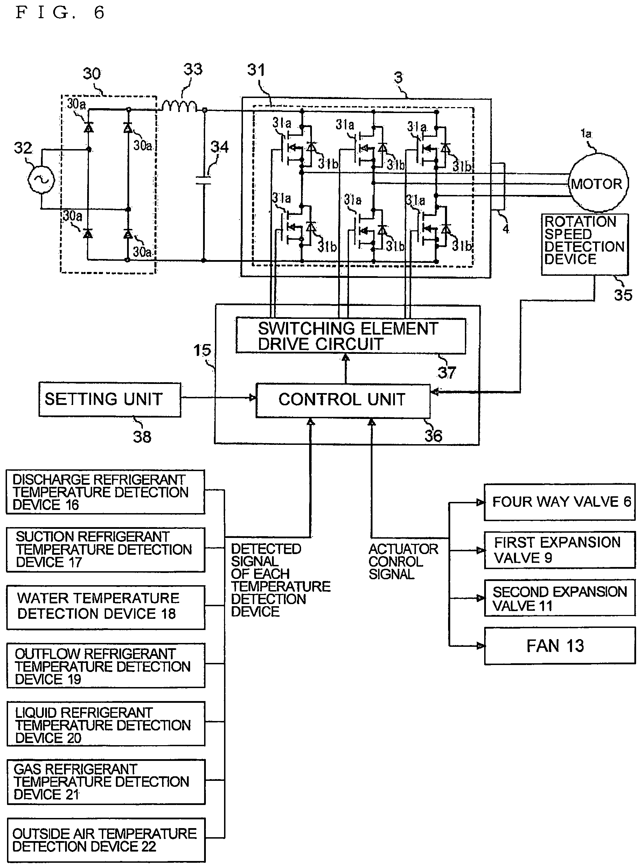

The heat pump apparatus 100 according to the present invention is described in terms of the electronic circuit configuration. Fig. 6 is an electronic circuit diagram of the heat pump apparatus 100 according to Embodiment 1. The electronic circuit of the heat pump apparatus 100 includes a converter unit 30 and an inverter unit 31 that is incorporated in the inverter module 3. The converter unit 30 has four bridge-connected rectifying diodes 30a, rectifying an AC current supplied from an AC power supply 32 (for example, single-phase or three-phase commercial power source). The inverter unit 31 includes six switching elements 31a, each of which is connected in parallel with a free-wheel diode 31b. The converter unit 30 is not limited to a configuration of four rectifying diodes 30a, and may include four to six rectifying diodes.

A reactor 33 or a smoothing capacitor 34 is provided between the converter unit 30 and the inverter unit 31, through which a current rectified by the converter unit 30 is smoothed as a DC current and sent to the inverter unit 31. The circuit configuration of the converter unit 30 is shown as an example, and a high power-factor converter circuit in which the converter unit 30 also contains switching elements may be used.

The inverter unit 31 is subject to PWM (Pulse Width Modulation) control by the control substrate 15, converting a DC current into a three-phase AC current of any variable frequency and supplying it to the motor 1a provided in the compressor 1. The compressor 1 has a rotation speed detection device 35 for detecting the rotation speed of the motor 1a from the position of the rotating rotor of the motor 1a. The rotation speed of the motor 1a detected by the rotation speed detection device 35 is generated to the control substrate 15.

The inverter unit 31 is subject to PWM control, generating heat from the switching elements 31a and the free-wheel diodes 31b when the switching elements 31a perform switching. The present invention has a structure in which the inverter module 3 is mounted on the water-refrigerant heat exchanger 2, thereby allowing the heat generated during the switching to be transmitted to water flowing in the water-refrigerant heat exchanger 2.

The control substrate 15 has a control unit 36 for controlling the actuator of such as the compressor 1 and a switching element drive circuit 37 for driving the switching element 31a. In particular, the control unit 36 generates a PWM signal when controlling the drive of the compressor 1 and outputs it to the switching element drive circuit 37. The switching element drive circuit 37 drives the switching element 31a on the basis of the received PWM signal. In the compressor 1, the rotation speed of the motor 1a is controlled in accordance with the duty cycles and drive frequencies of the AC power supplied from the inverter module 3. Greater duty cycles or higher drive frequencies result in greater electric power which is supplied to the compressor 1, causing the motor to run at a higher speed. In contrast, smaller duty cycles or lower drive frequencies result in smaller electric power which is supplied to the compressor 1, causing the motor to run at a lower speed. Higher motor rotation speeds result in an increase in the amount of a refrigerant discharged from the compressor 1, while lower motor rotation speeds result in a decrease in the amount of a discharged refrigerant. The control unit 36 can control the rotation speed of the compressor 1 through the PWM signal to be output to the switching element drive circuit 37.

The control unit 36 receives the detected values from the discharge refrigerant temperature detection device 16, the suction refrigerant temperature detection device 17, the water temperature detection device 18, the outflow refrigerant temperature detection device 19, the liquid refrigerant temperature detection device 20, the gas refrigerant temperature detection device 21, and the outside air temperature detection device 22, the detected values from the rotation speed detection device 35, and the operating information set through a setting unit 38 such as a remote controller or the like provided indoor. The control unit 36 performs control of the actuators such as the compressor 1 in accordance with these detected values and the operating information.

The present invention has a structure in which the inverter module 3 is mounted onto the water-refrigerant heat exchanger 2, thereby allowing the water flowing in the water-refrigerant heat exchanger 2 to be heated by the heat generated by the inverter module 3. In this case, greater temperature differences between the inverter module 3 and water result in a higher efficiency in heat transmission. In other words, it is preferable that the inverter module 3 can generate heat to a higher degree where possible only if no failure occurs. Accordingly, the present invention employs a wide bandgap semiconductor for both groups of the six switching elements 31a and free-wheel diodes 31b, or for at least one of the groups. The switching element 31a includes a MOSFET (Metal Oxide Semiconductor Field Effect Transistor) that employs a wide bandgap semiconductor, while the free-wheel diode 31b includes an SBD (Schottky Barrier Diode) that employs a wide bandgap semiconductor. The wide bandgap semiconductor refers to a semiconductor having a wider bandgap than silicon, including SiC (silicon carbide), GaN (gallium nitrode), diamond and the like.

The wide bandgap semiconductor device has an allowable operating temperature in excess of 200 degrees C, which is higher than that of silicon devices. For this reason, the switching element 31a and the free-wheel diode 31b which employ a wide bandgap semiconductor have higher operating temperature limits than those using a silicon semiconductor, namely, can operate at higher temperatures. Accordingly, the switching element 31a and the free-wheel diode 31b which employ a wide bandgap semiconductor are used for the inverter unit 31, which is caused to operate so as to become high in temperature due to self heating, thereby allowing the temperature of the inverter module 3 to be raised. The switching element 31a and the free-wheel diode 31b which employ a wide bandgap semiconductor have higher operating temperature limits, which ensure a stable operation even under the high-temperature atmospheric conditions of an enclosed space in the case 23 and thereby improves the reliability of the inverter module 3.

In addition, the wide bandgap semiconductor device has higher dielectric breakdown strength and withstanding voltage than a silicon device, allowing downsizing of the elements. Also, it has higher heat conductivity than a silicon device, providing a better heat radiation performance. For these reasons, the use in the inverter unit 31 of the switching element 31a and the free-wheel diode 31b which employ a wide bandgap semiconductor allows downsizing of the inverter module 3. In Embodiment 1, since the inverter module 3 is housed in the case 23, downsizing of the inverter module 3 allows the amount of the heat insulating material 26 to be increased, thereby heightening the heat insulating performance of the case 23 and enabling the water to be effectively heated by the heat generated by the inverter module 3.

Furthermore, since the wide bandgap semiconductor device has less conduction loss than a silicon device, the use in the inverter unit 31 of the switching element 31a and the free-wheel diode 31b which employ a wide bandgap semiconductor enables the heat pump apparatus 100 to improve energy saving.

As described above, the heat pump apparatus 100 according to Embodiment 1 has the inverter module 3 mounted on the water-refrigerant heat exchanger 2, which allows the heat generated by the inverter module 3 to be used for heating the water, thereby achieving an highly energy-saving and highly efficient heat pump apparatus. In addition, the inverter module 3 is covered with the heat insulating material 26 inside the case 23, thereby allowing the heat generation by the inverter module 3 to be used for heating the water without causing it to be released into the air.

Furthermore, the installation of the inverter module 3 on the water-refrigerant heat exchanger 2 eliminates the need for a heat sink, contributing to downsizing and cost reduction of the heat pump apparatus.

Also, the use of a highly heat-resisting wide bandgap semiconductor in the switching element 31a or the free-wheel diode 31b or both of the inverter module 3 increases a temperature difference between the inverter module 3 and the water flowing in the water-refrigerant heat exchanger 2, thereby allowing the heat generated by the inverter module 3 to be effectively transmitted to the water. Furthermore, it enables downsizing of the inverter module 3 and increases the amount of the heat insulating material 26, which can improve the heat insulating performance of the case 23, thereby effectively making use of the heat generated by the inverter module and improving the energy saving performance of the heat pump apparatus 100.

In Embodiment 1, the converter unit 30 may be mounted on, for example, the control substrate 15 separate from the inverter module 3, or a substrate having the converter 30 may be mounted on the outside of the case 23. Alternatively, it may be mounted on the same substrate as the inverter unit 31 inside the inverter module 3, or, like the inverter unit 31, at least one of the rectifying diodes 30a in the converter unit 30 may include an SBD using SiC. Using a wide bandgap semiconductor in the rectifying diodes 30a provides the afore-mentioned advantageous effects.

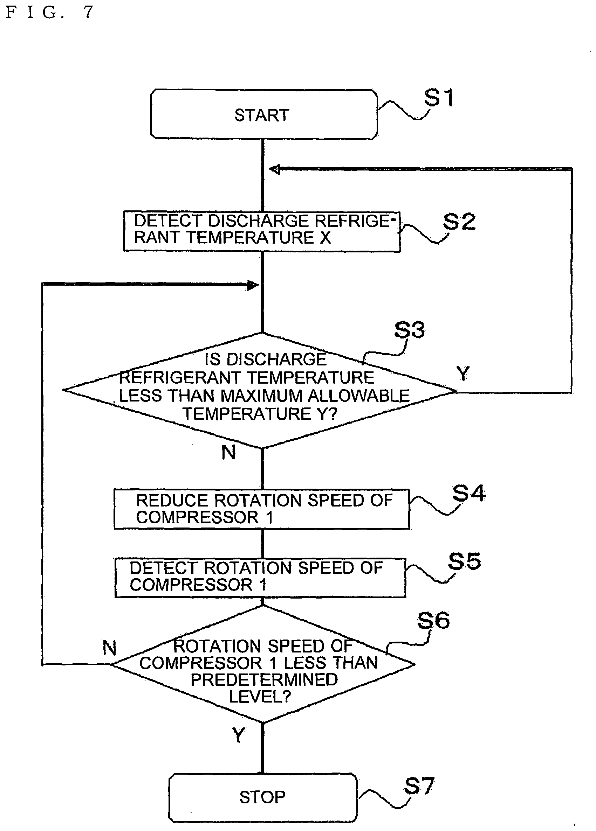

A control method for the heat pump apparatus 100 according to Embodiment 1 is described below. Fig. 7 is a control flow chart of the heat pump apparatus. With reference to Fig. 7, a control method is described below for protecting the heat pump apparatus 100 when the inverter module 3 becomes higher in temperature than predetermined without being cooled after the inverter module becomes abnormally heated, a pump for supplying water to the water-refrigerant heat exchanger 2 fails, or the water circuit B is clogged.

In S1 (hereinafter, "S" is an abbreviation for "step"), the heat pump apparatus 100 is activated by starting the motor 1a in the compressor 1. In S2, the temperature (outflow refrigerant temperature X) of the refrigerant that is condensed in and discharged from the water-refrigerant heat exchanger 2, which is detected by the outflow refrigerant temperature detection device 19, is output to the control unit 36.

In S3, the control unit 36 compares the outflow refrigerant temperature X received in S2 with a maximum allowable temperature Y that is predetermined according to the type of refrigerant. During a normal operation, namely, when water and a refrigerant are flowing without any difficulty inside the water-refrigerant heat exchanger 2, a high-temperature refrigerant discharged from the compressor 1 becomes cooled after giving its heat to the water in the water-refrigerant heat exchanger 2. For this, a detected value of the outflow refrigerant temperature detection device 19 will not become higher than the maximum allowable temperature Y, allowing a normal, continuous operation at operating temperatures below the maximum allowable temperature Y. As for the inverter module 3, it is equivalent in temperature to the water-cooled heat sink, and therefore its temperature is maintained at temperatures below the maximum allowable temperature Y and no possible failure or deterioration is envisioned. However, if the occurrence of a failure, such as a clogged water circuit B or a pump failure, during operations results in no water flow or reduced water flow rate in the water-refrigerant heat exchanger 2, a high-temperature refrigerant flowing into the water-refrigerant heat exchanger 2 does not become cooled and, in addition to it, receives heat from the inverter module 3, which causes the detected value of the outflow refrigerant temperature detection device 19 to go up, resulting in continued exceedance of the maximum allowable temperature Y.

Although the outflow refrigerant temperature X detected in S2 is compared with the maximum allowable temperature Y in S3, the maximum allowable temperature Y is dependent on the type of refrigerant used and setting values are different based thereon. For example, if a R410A refrigerant is used, the maximum allowable temperature Y is generally set to below the critical temperature. For this, the control unit 36 is usually configured to have temperature settings of about 60 to 65 degrees C. Even for a carbon dioxide refrigerant that is capable of high-temperature tapping, the maximum allowable temperature Y is set to about 90 degrees C below the boiling point of water.

In S4, the control unit 36 controls the switching element drive circuit 37 so as to lower the drive frequency and the duty cycle of the switching element 31a and thereby reduce the rotation speed of the motor 1a in the compressor 1. As the result, the temperature of the refrigerant discharged from the compressor 1 and the heat generation from the inverter module 3 decreases.

In S5, the rotation speed detection device 35 detects the rotation speed of the motor 1a in the compressor 1 and outputs it to the control unit 36, and then the flow proceeds to S6.

In S6, the control unit 36 makes a judgment as to whether or not the rotation speed of the compressor 1 is less than a predetermined level. Although the rotation speed of the compressor 1 is reduced in S4, excessively reducing the rotation speed of the compressor 1 results in a reduction in an amount of refrigerant discharge, causing surge phenomena which may trigger a variation in refrigerant discharge pressure and flow rate or compressor vibrations, noise, and failure. Surge is a phenomenon of fluid pressure/flow rate instability or variation. To avoid this phenomenon, a judgment is made in S6 as to whether or not the rotation speed of the motor 1a in the compressor 1, which is detected in S5, is greater than a predetermined level. If the rotation speed of the compressor 1 is found to be less than the predetermined level, the flow proceeds to S7 where the compressor 1 is shutdown. If the rotation speed of the compressor 1 is more than the predetermined level, the flow returns to S3. The control unit 36 is configured in advance to have the predetermined value or a minimum rotation speed stored therein, and the control unit 36 compares the stored value with a value received in S5 for making a judgment.

As described above, if the outflow refrigerant temperature X is found to be higher than the maximum allowable temperature Y in S3, the control method for the heat pump apparatus 100 according to Embodiment 1 controls the switching element drive circuit 37 in S4 so as to reduce the rotation speed of the compressor 1, thereby reducing a load on the inverter module 3 to suppress the heat generation associated with a rise of temperature of the inverter module 3. In addition, if the outflow refrigerant temperature X continues to rise regardless of reduced rotation speed of the compressor 1, the rotation speed of the compressor 1 is reduced to a lower limit in S6, and then the compressor 1 is shutdown, thereby preventing the inverter module 3 from suffering from heat damage. This is because even conventional silicon inverter modules are operable with no heat damage until its case temperature reaches about 100 degrees C and therefore the maximum allowable temperature Y of an outflow refrigerant dependent on the boiling points of water or refrigerant becomes lower than that temperature, which causes the restriction control for the refrigerant system to replace a temperature protection device for the inverter module 3.

Furthermore, the control method performs control to protect the heat pump apparatus without a detection device for directly detecting the temperature of the inverter module 3 and its dedicated heat sink separately provided, thereby achieving a low-cost heat pump apparatus.

As described above, even if a failure such as a clogged water circuit occurs, the heat pump apparatus can be protected by controlling the outflow refrigerant temperature X so as to be less than the outflow refrigerant maximum allowable temperature Y When such a failure occurs, the temperature of the refrigerant discharged from the compressor 1 and the temperature of the water flowing into the water-refrigerant heat exchanger 2 also rise inevitably. For this reason, these temperature rises may be detected by the discharge refrigerant temperature detection device 16 and the water temperature detection device 18, and they may be compared with a maximum allowable temperature set in the same manner as above, thereby performing restrictions or protection operations. Also, since such a failure is accompanied by an increase in discharge pressure, a pressure sensor or pressure switch provided at the discharge pipe may be used to shutdown the apparatus when a specified pressure (about 4MPa for R410A refrigerant) is reached. Furthermore, the control through combined temperature protection and pressure control may be used.

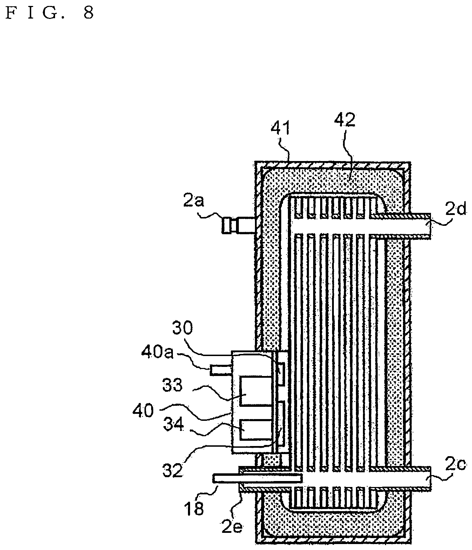

Embodiment 1 has a structure in which the inverter unit 31 is incorporated as the inverter module 3 in the case 23 and electrical components including the converter unit 30 and the smoothing capacitor 34 are provided on the outside of the inverter module 3. In such a structure, the electrical components such as the smoothing capacitor 34 are provided separately from the inverter unit 31, which causes a problem of noise contamination in a current flowing through the inverter 31 or creates the need for a substrate separately provided for the electrical components. In a non-claimed heat pump apparatus, incorporation of the electrical components including the reactor 33 and the smoothing capacitor 34 into the inverter module is described below with reference to Fig. 8. The reference numerals and symbols refer to the same components as those with the same reference numerals and symbols in Embodiment 1, and repeated descriptions of the same components are omitted.

Fig. 8 is a cross-sectional view of a water-refrigerant heat exchanger 2 and an inverter module 40 according to a non-claimed heat pump apparatus. A converter unit 30, an inverter unit 31, and other electrical components described in Fig. 6, including a reactor 33, a smoothing capacitor 34, and a switching element drive circuit 37, are provided inside the inverter module 40.

In this non-claimed heat pump apparatus, a case 41 containing the water-refrigerant heat exchanger 2 and a heat insulating material 42 provided inside the case 41 have an opening penetrating through the case 41 and the heat insulating material 42 provided at a portion thereof. The inverter module 40 is inserted into the opening. As is the case for Embodiment 1, a radiating surface of the inverter module 40 is in contact with the outer surface of the water-refrigerant heat exchanger 2 and part of an enclosure of the inverter module 40 projects from the case 41. The inverter module 40 has a substrate provided thereinside so as to be parallel to a side of the water-refrigerant heat exchanger 2, and its surface at the side of the water-refrigerant heat exchanger 2 has the converter unit 30 containing a rectifying diode 30a and the inverter unit 31 containing a switching element 31a and a free-wheel diode 31b provided thereon. In addition, the opposite surface has electrical components including a reactor 33 and a smoothing capacitor 34 provided thereon. In other words, the rectifying diode 30a, the switching element 31a, and the free-wheel diode 31b are provided on a substrate surface face-to-face with the water-refrigerant heat exchanger 2. A substrate provided with the electrical components may be mounted on another substrate and may be arranged in layers so as to be lapped over the inverter module 40 installed on the surface of the water-refrigerant heat exchanger 2.

A connector 40a electrically connected to the substrate is provided on a surface projecting from the case 23 of the inverter module 40. Electric power can be supplied to the inverter module 40 by inserting a plug connected to an AC power source to the connector 40a. Also, by inserting a plug connected to an AC power source, a signal for driving the switching element 31a can be output from the control substrate 15 to the inverter module 40.

If a heat-transfer member, such as, for example, silicon, is provided between the water-refrigerant heat exchanger 2 and the rectifying diode 30a, the switching element 31a, and the free-wheel diode 31b, the heat generated by the inverter module 40 can be effectively transmitted to the water-refrigerant heat exchanger 2.

As described above, this non-claimed heat pump apparatus has the reactor 33 and the smoothing capacitor 34 provided in the inverter module 40 thereof, thereby reducing noise contamination in a current supplied to the compressor 1 from the inverter unit 31 and improving the operational stability of the compressor 1.

Also, heat-sensitive electric components, such as the switching element drive circuit 37 and the smoothing capacitor 34, are mounted on a substrate surface opposite to non-heat sensitive semiconductor devices, such as the rectifying diode 30a, the switching element 31a, and the free-wheel diode 31b, thereby keeping the electric components away from the semiconductor devices to prevent the electric components from the heat generated by the semiconductor devices during the switching operation.

Furthermore, an opening is formed in the case 41 and the heat insulating material 42, and the inverter module 40 is inserted into such an opening. For this, the electric components are not covered with the heat insulating material 42. This allows their own heat to be released into the outside of the case 41, thereby preventing the electric components from the heat generated by the semiconductor devices during the switching operation.

The heat pump apparatus according to the present invention can be applied to a heat pump apparatus for producing hot water used for a hot water supply or room heating system.

### Reference Signs List

- 100: heat pump apparatus
- 1: compressor
- 2: water-refrigerant heat exchanger
- 2a: refrigerant inlet
- 2b: refrigerant outlet
- 2c: water inlet
- 2d: water outlet
- 2e: temperature detection device insertion opening
- 3: inverter module
- 4: connector
- 5: discharge pipe
- 6: four-way valve
- 7: water pipe
- 8: pump
- 9: first expansion valve
- 10: accumulator
- 11: second expansion valve
- 12: air-cooled heat exchanger
- 13: blower fan
- 14: suction pipe
- 15: control substrate
- 16: discharge refrigerant temperature detection device
- 17: suction refrigerant temperature detection device
- 18: water temperature detection device
- 19: outflow refrigerant temperature detection device
- 20: liquid refrigerant temperature detection device
- 21: gas refrigerant temperature detection device
- 22: outside air temperature detection device
- 23: case
- 24: surface
- 25: circumferential surface
- 26: heat insulating material
- 27: water layer
- 28: refrigerant layer
- 30: converter unit
- 30a: rectifying diode
- 31: inverter unit
- 31a: switching element
- 31b: free-wheel diode
- 32: ac power supply
- 33: reactor
- 34: smoothing capacitor
- 35: rotation speed detection device
- 36: control unit
- 37: switching element drive circuit
- 38: setting unit
- 40: inverter module
- 40a: connector
- 41: case
- 42: heat insulating material

## Claims

1. A heat pump apparatus (100) comprising:
a compressor (1) that compresses a low-temperature refrigerant and discharges a high-temperature refrigerant;
a heat exchanger (2) in which water to be heated through heat exchange with the high-temperature refrigerant flows, the heat exchanger (2) having a case (23) in which it is housed;
an inverter module (3) that is mounted in the case (23) of the heat exchanger (2) and includes a wide bandgap semiconductor device in an inverter unit (31) for converting a DC current to an AC current and supplies the AC current to the compressor (1), **characterized by**
a heat insulating material (26) provided inside the case (23) and covering the heat exchanger (2) and the inverter module (3).

2. The heat pump apparatus (100) of Claim 1,
wherein the heat exchanger (2) includes an inlet (2c) in a lower part thereof, into which the water before being subjected to heat exchange flows and an outlet (2d) in an upper part thereof, through which the water after being subjected to heat exchange flows out, and
the inverter module (3) is located closer to the inlet (2c) than to the outlet (2d).

3. The heat pump apparatus (100) of Claim 2,
wherein a temperature detection device (18) for detecting a temperature of the water is provided in the inlet (2c).

4. The heat pump apparatus (100) of any one of Claims 1 to 3,
wherein the wide bandgap semiconductor device is a MOSFET using a silicon carbide or a Schottky barrier diode using a silicon carbide.

## Patentansprüche

1. Wärmepumpenvorrichtung (100), Folgendes umfassend:
einen Kompressor (1), der ein Niedrigtemperatur-Kältemittel komprimiert und ein Hochtemperatur-Kältemittel ausgibt;
einen Wärmetauscher (2), in dem Wasser strömt, das durch Wärmeaustausch mit dem Hochtemperatur-Kältemittel erwärmt werden soll, wobei der Wärmetauscher (2) ein Gehäuse (23) aufweist, in dem er untergebracht ist;
ein Wechselrichtermodul (3), das in dem Gehäuse (23) des Wärmetauschers (2) befestigt ist und eine Breite-Bandlücke-Halbleitervorrichtung in einer Wechselrichtereinheit (31) zum Umwandeln eines Gleichstroms in einen Wechselstrom umfasst und den Wechselstrom an den Kompressor (1) liefert,
**gekennzeichnet durch**
ein wärmeisolierendes Material (26), das innerhalb des Gehäuses (23) bereitgestellt ist und den Wärmetauscher (2) und das Wechselrichtermodul (3) abdeckt.

2. Wärmepumpenvorrichtung (100) nach Anspruch 1,
wobei der Wärmetauscher (2) einen Einlass (2c) in einem unteren Teil davon, in den das Wasser strömt, bevor es einem Wärmeaustausch unterworfen wird, und ein Auslass (2d) in einem oberen Teil davon umfasst, durch den das Wasser ausströmt, nachdem es einem Wärmeaustausch unterworfen wurde, und
das Wechselrichtermodul (3) näher an dem Einlass (2c) als an dem Auslass (2d) lokalisiert ist.

3. Wärmepumpenvorrichtung (100) nach Anspruch 2,
wobei eine Temperaturdetektionsvorrichtung (18) zum Detektieren einer Temperatur des Wassers in dem Einlass (2c) bereitgestellt ist.

4. Wärmepumpenvorrichtung (100) nach einem der Ansprüche 1 bis 3,
wobei die Breite-Bandlücke-Halbleitervorrichtung ein MOSFET ist, der ein Siliziumcarbid oder eine Schottky-Sperrschichtdiode unter Verwendung eines Siliziumcarbids verwendet.

## Revendications

1. Appareil de pompe à chaleur (100) comprenant :
un compresseur (1) qui comprime un fluide frigorigène à basse température et décharge un fluide frigorigène à haute température ;
un échangeur de chaleur (2) dans lequel l'eau à chauffer par échange de chaleur avec le fluide frigorigène à haute température s'écoule, l'échangeur de chaleur (2) comportant un boîtier (23) dans lequel il est logé ;
un module d'onduleur (3) qui est monté dans le boîtier (23) de l'échangeur de chaleur (2) et qui comprend un dispositif à semi-conducteurs à large bande interdite dans une unité d'onduleur (31) pour convertir un courant continu en un courant alternatif et qui fournit le courant alternatif au compresseur (1),
**caractérisé par**
un matériau d'isolation thermique (26) prévu à l'intérieur du boîtier (23) et recouvrant l'échangeur de chaleur (2) et le module d'onduleur (3).

2. Appareil de pompe à chaleur (100) selon la revendication 1,
dans lequel l'échangeur de chaleur (2) comprend une entrée (2c) dans une partie inférieure de celui-ci, dans laquelle l'eau avant d'être soumise à un échange de chaleur s'écoule, et une sortie (2d) dans une partie supérieure de celui-ci, à travers laquelle l'eau sort après avoir été soumise à un échange de chaleur, et
le module d'onduleur (3) est situé plus près de l'entrée (2c) que de la sortie (2d).

3. Appareil de pompe à chaleur (100) selon la revendication 2,
dans lequel un dispositif de détection de température (18) pour détecter une température de l'eau est prévu dans l'entrée (2c).

4. Appareil de pompe à chaleur (100) selon l'une quelconque des revendications 1 à 3,
dans lequel le dispositif à semi-conducteurs à large bande interdite est un transistor MOSFET utilisant un carbure de silicium ou une diode à barrière Schottky utilisant un carbure de silicium.
